# EUROPÄISCHE PATENTSCHRIFT

(11) **EP 3 840 958 B1**
(45) Veröffentlichungstag und Bekanntmachung des Hinweises auf die Patenterteilung: **19.02.2025**
(21) Anmeldenummer: 19755643.4
(22) Anmeldetag: 22.08.2019
(51) Int. Cl.: B42D 25/41, B42D 25/48, B42D 25/36, B42D 25/382, B42D 25/324, B42D 25/23, B42D 25/24, C09B 67/00, B41M 5/26

(54) **VERBESSERTES VERFAHREN FÜR DAS PARTIELLE EINFÄRBEN VON KUNSTSTOFFTEILEN**
IMPROVED METHOD FOR PARTIAL COLOURING OF PLASTIC PARTS
PROCÉDÉ AMÉLIORÉ POUR LA COLORATION PARTIELLE DE PIÈCES EN MATIÈRE PLASTIQUE

(30) Priorität: 23.08.2018 EP 18190363
(43) Veröffentlichungstag der Anmeldung: 30.06.2021
(60) Teilanmeldung: 24216362.4
(73) Patentinhaber: Covestro Deutschland AG, 51373 Leverkusen (DE)
(72) Erfinder: TZIOVARAS, Georgios, 41464 Neuss (DE); KÜNZEL, Roland, 51381 Leverkusen (DE)
(74) Vertreter: Levpat
(86) Internationale Anmeldenummer: PCT/EP2019/072431
(87) Internationale Veröffentlichungsnummer: WO 2020/039018

(56) Entgegenhaltungen:
- EP-A2- 2 050 866
- WO-A1-00/14325
- WO-A1-2015/193013
- WO-A1-2017/167651

## Beschreibung

Die vorliegende Erfindung betrifft ein verbessertes Verfahren zum partiellen Einfärben, insbesondere zum farbigen Lasergravieren, von Kunststoffteilen, insbesondere thermoplastischen Kunststoffteilen, ganz besonders von thermoplastischen Kunststoffteilen umfassend einen Schichtaufbau, ein Sicherheitsdokument umfassend ein partiell eingefärbtes Kunststoffteil sowie eine Vorrichtung zum partiellen Einfärben von Kunststoffteilen.

Die Möglichkeit Kunststoffteile farbig mittels Laser zu gravieren ist von Interesse für die gesamte Industrie der Kunststoffteilefertigung. Von Interesse ist hierbei die farbige Lasergravur von dreidimensional geformten Kunststoffteilen z.B. für die Automobilindustrie. So können z. B. Schalter, Blenden, usw. mit farbigen Symbolen graviert werden. Dabei können auch Kunststoffteile mittels Laser farbig graviert werden, welche eine Lackierung für deren Oberflächenschutz aufweisen. Der Laserstrahl entfernt die Lackschicht und gleichzeitig migriert der Farbstoff an dieser Stelle in die Kunststoffoberfläche ein. Es können auch ungeschützte Kunststoffoberflächen farbig lasergraviert werden und anschließend lackiert werden, um eine durchgehende glänzende Erscheinung der Kunststoffteile zu gewährleisten und Schutz gegen Kratzer und chemischer Beschädigung zu bieten. Bislang können solche farbigen Symbole beispielsweise im ersten Fertigungsschritt durch Kunststoffspritzguss mit mehreren farbigen Komponenten hergestellt werden. In einem zweiten Fertigungsschritt müssen die Kunststoffteile mit einer deckenden Farbe lackiert werden. In einem dritten Fertigungsschritt muss die Farbschicht mittels Laser graviert werden, um die darunterliegende Kunststoffoberfläche freizulegen. Optional kann in einem vierten Fertigungsschritt ein Schutzlack aufgetragen werden.

Alternativ können transparente Kunststofffolien rückseitig farbig graviert werden und anschließend mit einem Thermoplasten hinterspritzt werden, entsprechend dem Verfahren Film Insert Moulding, um glänzende oder einheitlich aussehende Oberflächen zu erhalten. Dieses Verfahren wird beispielsweise in EP-A 0691201 Beispiel 1 offenbart.

Auf dem Markt der Sicherheits- und/oder Wertdokument, insbesondere IdentifikationsDokumente (ID-Dokumente) besteht der Bedarf für farbiges Personalisieren dieser Dokumente mittels Laser. Das Personalisieren von ID- Dokumenten, die teilweise oder komplett aus Polymerfolien bestehen, mittels Lasergravur ist Stand der Technik. Jedoch erstellen die bislang bekannten Lasergravur-Verfahren in ID-Dokumenten lediglich Bilder und Texte in verschiedenen Graustufen. Farbige Elemente können durch Lasergravur nicht erstellt werden. Nur in Kombination mit zuvor drucktechnisch aufgetragenen Farbschichten, welche nachträglich mittels Laser verändert werden, ist es möglich farbige Bilder in oder auf Kunststoffteilen bzw. ID-Dokumenten zu generieren.

In den letzten Jahren wurden insbesondere im Bereich der Sicherheits- und/oder Wertdokumente, insbesondere ID-Dokumente, Verfahren entwickelt, welche das Erstellen von farbigen Elementen in diesen Dokumenten, die ganz oder teilweise aus Polymerfolien aufgebaut sind, erlauben. Diese Verfahren werden beispielsweise in WO-A 03/056507, EP-A 2752302 oder JP-A 2012-011688 beschrieben, sind jedoch mit erheblichem technischem Aufwand verbunden. Alle Verfahren beinhalten einen Druckprozess um die Farbgebung zu realisieren.

WO-A 2017/167651 offenbart ein Verfahren zum partiellen Einfärben, insbesondere zum farbigen Lasergravieren, von Kunststoffteilen, insbesondere von thermoplastischen Kunststoffteilen, ganz besonders von Kunststofffolien.

Die unveröffentlichten Patentanmeldung LU-A100327 offenbart ein verbessertes Verfahren zum partiellen Einfärben, insbesondere zum farbigen Lasergravieren, von Kunststoffteilen, insbesondere von thermoplastischen Kunststoffteilen, ganz besonders von Kunststofffolien. In dem Verfahren gemäß LU-A100327 umfassen die Kunststoffteile Additive, welche im Wellenlängenbereich der eingesetzten fokussierten nicht-ionisierenden elektromagnetischen Strahlung ein Absorptionsmaximum aufweisen oder das Kunststoffteil wird mit einem Additiv in Form eines Beschichtungsmittels beschichtet.

Nachteilig bei beiden Verfahren ist jedoch die Intensität, die Schärfe und die Positionsgenauigkeit der resultierenden partiellen Einfärbung, insbesondere der resultierenden farbigen Lasergravur.

Daher bestand die Aufgabe der vorliegenden Erfindung ein verbessertes Verfahren zum partiellen Einfärben, insbesondere für das farbige Lasergravieren, von Kunststoffteilen, bevorzugt von thermoplastischen Kunststoffteilen, ganz besonders von thermoplastischen Kunststoffteilen umfassend einen Schichtaufbau, wie beispielsweise Kunststofffolien und/oder Folienschichtverbunden bereit zu stellen, so dass eine positionsgenaue, scharfe und gleichmäßig intensive partielle Einfärbung, insbesondere farbige Lasergravur resultiert.

Diese Aufgabe wurde überraschenderweise gelöst durch das in Anspruch 1 definierte Verfahren.

Im Rahmen dieser Erfindung wird unter "im Wesentlichen" verstanden, dass lediglich an den in Schritt ii) bestrahlten Stellen ein farbiges Element entsteht, welches mit den Auge als sichtbares farbiges Element eindeutig zu erkennen ist.

Unter Eintauchen in Schritt i) wird das zumindest teilweise Benetzen der Oberfläche des Kunststoffteils (A) mit dem Färbungsbad (B) verstanden, in dem sich mindestens ein Farbmittel befindet. Das Eintauchen in Schritt i) kann auch durch anderweitiges Benetzen der Oberfläche des Kunststoffteils (A) mittels einer Färbungsschicht b) erfolgen.

Unter konstanter Temperatur des Färbungsbades (B) wird im Rahmen dieser Erfindung verstanden, dass die Temperatur des Färbungsbades während der Dauer des Verfahrens um maximal 10 °C nach oben oder nach unten, vorzugsweise um maximal 8 °C nach oben oder nach unten, besonders bevorzugt um maximal 5 °C nach oben oder nach unten, von der gewählten Temperatur des Färbungsbades (B) abweichen kann.

Alternativ kann das Färbungsbad (B) während der Dauer des Verfahrens eine Variation der Temperatur um mehr als 10 °C, bevorzugt um bis zu 20 °C, weiterhin bevorzugt um bis zu 50 ° C. besonders bevorzugt um bis zu 100 °C erfahren.

Das erfindungsgemäße Verfahren zeichnet sich dadurch aus, dass die partielle Einfärbung des Kunststoffteils, insbesondere des thermoplastischen Kunststoffteils, ganz besonders des thermoplastischen Kunststoffteils umfassend einen Schichtaufbau, im Wesentlichen an den in Schritt ii) bestrahlten Stellen mit in einer verbesserten Intensität und verbesserten Schärfe der Färbung erfolgt. Das restliche Kunststoffteil (A) weist keine bzw. nur eine sehr schwache Einfärbung an den nicht bestrahlten Bereichen auf. Somit ist es möglich, gezielt Bereiche des Kunststoffteils einzufärben, um beispielsweise Bild, Personalisierung, Logo, Symbol oder Schriftzug auf dieses Kunststoffteil durch das erfindungsgemäße Verfahren aufzubringen. Diese lassen sich nicht ohne weiteres von der Kunststoffoberfläche entfernen. Somit eignet sich das erfindungsgemäße Verfahren insbesondere für den Bereich der Herstellung von Sicherheits- und Identifikationsdokumente.

Insbesondere bei Bestrahlung mit Laserstrahlung erreichen diese farbigen Elemente besonders hohe Auflösungen von 5000 dpi und gegebenenfalls auch höher. Das erfindungsgemäße Verfahren erfordert weder eine hochpräzise Drucktechnik noch den Einsatz verschiedener Laserstärken, beispielsweise von Lasern welche in verschiedenen Wellenlängen emittieren, sofern die Bestrahlung in Schritt ii) mit Laserstrahlung erfolgt. Zudem ist das erfindungsgemäße Verfahren, wie weiter unten beschrieben, für das Aufbringen von farbigen Elementen sowohl auf zwei- und/oder dreidimensionalen Kunststoffteilen (A) als auch auf thermoplastischen Kunststoffteilen (A) umfassend einen Schichtaufbau enthaltend eine oder mehrere Schichten eines thermoplastischen Kunststoffs geeignet.

Hoch fokussierte Lasersysteme können durchgehende farbige Linien erzeugen, welches ein Merkmal des Sicherheitsdrucks ist, in einer Breite von 10 µm. Das ist mit keinem der heute verfügbaren Druckverfahren möglich.

Die Platte (D) kann derart in dem Färbungsbad (B) platziert werden, dass ein über die Dauer des gesamten Verfahrens gleichbleibender Abstand zwischen der Oberfläche des Kunststoffteils (A) und Platte (D) resultiert. Dieser Abstand zwischen der Oberfläche des Kunststoffteils (A) und Platte (D) wird auch Tauchtiefe bezeichnet. In dem Bereich der Tauchtiefe durchdringt die fokussierte nicht-ionisierende elektromagnetische Strahlung (C) das Färbungsbad (B) bevor sie auf die Oberfläche von (A) trifft.

Somit kann die Tauchtiefe während des gesamten Verfahrens exakt eingestellt werden und kann somit auch während der Dauer des gesamten Verfahrens konstant gehalten werden, um eine partielle Einfärbung hoher Intensität und Schärfe zu erzielen. Die Tauchtiefe kann in einer Ausführungsform ≤ 120 mm, vorzugsweise ≥ 0,01 bis ≤ 100 mm, besonders bevorzugt ≥ 0,1 bis ≤ 20 mm und ganz besonders bevorzugt ≥ 0,1 bis ≤ 5,0 mm betragen.

Bei zweidimensional geformten Kunststoffteilen (A), insbesondere thermoplastischen Kunststoffteilen umfassend einen Schichtaufbau enthaltend eine oder mehrere Schichten eines thermoplastischen Kunststoffs, kann eine vorzugsweise ebene Platte (D) eingesetzt werden. Vorzugsweise ist die Platte (D) parallel zur Oberfläche von (A) angeordnet. In einer anderen Ausführungsform für die Lasergravur von zweidimensional geformten Kunststoffteilen (A) kann eine Platte (D) in der Größe der zu erzielenden partiellen Einfärbung des Kunststoffteils im erfindungsgemäßen Verfahren eingesetzt werden.

Bei dreidimensionalen geformten Kunststoffteilen (A) kann eine entsprechend dreidimensional geformten Platte (D) verwendet werden, um eine gleichbleibende Tauchtiefe zu erzielen. Bevorzugt wird eine Platte (D) in der Größe der zu erzielenden partiellen Einfärbung im Kunststoffteil (A) eingesetzt. Dadurch kann sich die Form-Komplexität der Platte (D) reduzieren. Vorzugsweise ist die Platte (D) parallel zu der Tangente der dreidimensionalen Form (A), die farbig beschrieben werden soll, angeordnet.

In einer bevorzugten Ausführungsform des erfindungsgemäßen Verfahrens wird (C) senkrecht zur Platte (D) eingestrahlt.

Im erfindungsgemäßen Verfahren tritt der fokussierte nicht-ionisierende elektromagnetische Strahl (C), vorzugsweise Laserstrahl, durch die Platte (D) umfassend ein oder mehrere strahlungsauskoppelnde Materialien. Um dabei den Verlust der Intensität von (C) und auch die Streuung von (C) an der Platte (D) zu minimieren, sind bei der Wahl des strahlungsauskoppelnden Materials der Platte (D) solche mit einer hohen Oberflächengüte und Strahlungsdurchlässigkeit bevorzugt. Strahlungsauskoppelnde Materialien der Platte (D) können einen Scratch-Dig-Wert, bestimmt gemäß ISO 10110-8, von ≥ 80-50 bis ≤ 10-10, vorzugsweise von ≥ 60-40 bis ≤ 20-10, eine Oberflächenrauheit Rq, bestimmt gemäß ISO 10110-8, von ≥ 0,5 bis ≤ 500 nm, bevorzugt von ≥ 0,7 bis ≤ 100 nm, besonders bevorzugt von ≥ 1 nm bis ≤ 10 nm, und einer Strahlungsdurchlässigkeit für die gewählte Strahlung, bestimmt nach der Methode UV-VIS-NIR-MIR gemäß DIN EN ISO/IEC 17025, von ≥ 50 % bis ≤ 99,95 %, bevorzugt von ≥ 60 % bis ≤ 99,9 %, besonders bevorzugt von ≥ 70 % bis ≤ 99,89 % aufweisen.

In einer Ausführungsform kann ein oder mehrere strahlungsauskoppelnde Materialien der Platte (D) mindestens eine oder mehrere Verbindungen aus der Gruppe Glas, wie beispielsweise nichtoxidische Gläser, insbesondere Halogenidgläser oder Chalkogenidgläser, oxidische Gläser, insbesondere phosphathaltige Gläser, silikathaltige Gläser, Boratgläser, Alumosilikatgläser, Bleisilikatgläser, Alkali Silikatgläser, Borosilikatgläser, Alkaliboratgläser, Alkali-Erdalkalisilikatglas, Quarzglas, organische Gläser, strahlungsdurchlässiger Kunststoff, Mineralglas, synthetisches Glas, strahlungsdurchlässiger keramischer Werkstoff (z.B. Perlucor^{™} von der Firma CeramTec GmbH oder feinkristalline Spinell-Keramiken des Fraunhofer Instituts für Keramische Technologien und Systeme IKTS, oder strahlungsdurchlässige Glaskeramik Robax^{™} der Firma Schott AG) und/oder Mischungen aus mindestens zwei der vorstehenden Verbindungen umfassen. Vorzugsweise Glas, strahlungsdurchlässiger Kunststoff und/oder synthetisches Glas.

Das Färbungsbad (B) weist eine Temperatur von ≤ 99°C bis ≥ -60 °C, bevorzugt von ≤ 99 °C bis ≥ 0 °C, bevorzugt von ≤ 70°C bis ≥ 10 °C auf, ganz besonders bevorzugt von ≤ 50°C bis ≥ 15 °C und weist während der Dauer des Verfahrens eine konstante Temperatur auf. In einer bevorzugten Ausführungsform der Erfindung weist die Temperatur des Färbungsbades (B) zwischen der Oberfläche des Kunststoffteils (A) und der Platte (D) eine konstante Temperatur während der Dauer des Verfahrens auf .

Alternativ kann die Temperatur des Färbungsbads (B) während der Dauer des Verfahrens in einem Tempertaturbereich von 0 °C bis 100 °C, bevorzugt von 5 °C bis 80 °C, weiterhin bevorzugt von 10 °C bis 60 °C, mehr bevorzugt von 15 °C bis 40 °C, besonders bevorzugt von 20 °C bis 30 °C variiert werden.

In einer weiteren Ausführungsform kann die Temperatur des Färbungsbades (B), insbesondere die Temperatur des Färbungsbades (B) zwischen der Oberfläche des Kunststoffteils (A) und der Platte (D), durch entsprechende Temperiervorrichtungen, insbesondere Kühlvorrichtungen konstant gehalten werden.

In einer anderen Ausführungsform kann das Färbungsbad (B) kontinuierlich durch den Spalt zwischen der Oberfläche des Kunststoffteils (A) und der Platte (D) geleitet werden, so dass kein Wärmestau zwischen der Oberfläche von (A) und (D) aufkommt und so die Temperatur zwischen der Oberfläche von (A) und (D) im gewählten Temperaturbereich konstant gehalten wird.

Im erfindungsgemäßen Verfahren können eine Vielzahl an Kunststoffteilen (A), insbesondere thermoplastische Kunststoffteile, ganz besonders thermoplastische Kunststoffteile umfassend einen Schichtaufbau, eingesetzt werden. Bei den vorzugsweise thermoplastischen Kunststoffteilen, ganz besonders thermoplastischen Kunststoffteilen umfassend einen Schichtaufbau, kann es sich besonders bevorzugt um einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, handeln. Für bestimmte Anwendungen, wie beispielsweise im Bereich der Identifikationsdokumente, kann es vorteilhaft und demnach bevorzugt sein, einen transparenten thermoplastischen Kunststoff, vorzugsweise in Form von Kunststofffolien, einzusetzen.

Besonders geeignete thermoplastische Kunststoffe sind ein oder mehrere Polycarbonat(e) oder Copolycarbonat(e) auf Basis von Diphenolen, Poly- oder Copolyacrylat(e) und Poly- oder Copolymethacrylat(e) wie beispielhaft und vorzugsweise Polymethylmethacrylat bzw. Poly(meth)acrylat (PMMA), Poly- oder Copolymer(e) mit Styrol wie beispielhaft und vorzugsweise Polystyrol (PS), Acrylnitril-Butadien-Styrol (ABS), oder Polystyrolacrylnitril (SAN), thermoplastische Polyurethan(e), sowie Polyolefin(e), wie beispielhaft und vorzugsweise Polypropylentypen oder Polyolefine auf der Basis von cyclischen Olefinen (z.B. TOPAS^{®}, Hoechst), Poly- oder Copolykondensat(e) der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT) ), Polyamid (PA), Poly- oder Copolykondensat(e) der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Mischungen aus mindestens zwei der vorangehend genannten oder deren Blends.

Besonders bevorzugte thermoplastische Kunststoffe sind ein oder mehrere Polycarbonat(e) oder Copolycarbonat(e) auf Basis von Diphenolen oder Blends enthaltend wenigstens ein Polycarbonat oder Copolycarbonat. Ganz besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten Mw von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten Mw von 10.000 bis 200.000, bevorzugt von 21.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexandimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenylcycloalkane der Formel (Ia) 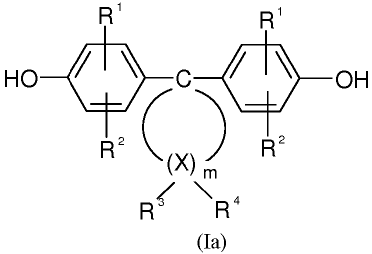 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha -Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

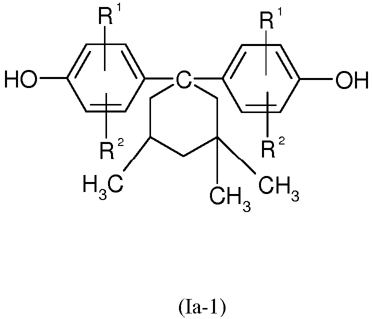

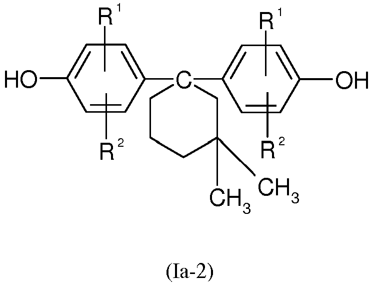

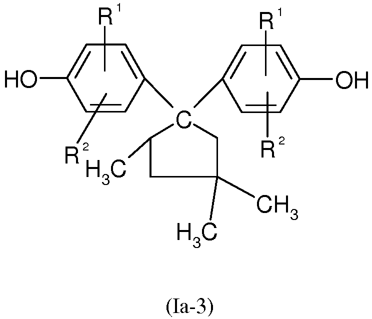

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 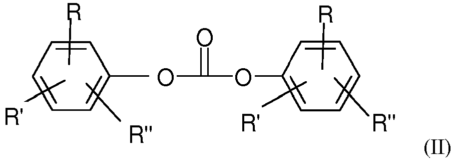 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch - COO-R‴ bedeuten kann, wobei R‴ für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat. Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 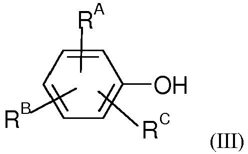 wobei
R^{A} für lineares oder verzweigtes C₁-C₃₄-Alkyl, C₇-C₃₄-Alkylaryl, C₆-C₃₄-Aryl oder für - COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat. Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Das Kunststoffteil enthaltend die vorstehend genannten thermoplastischen Polymere kann extrudiert, co-extrudiert, gegossen, dreidimensional gedruckt und/oder spritzgegossen sein. Es kann sich bei dem Kunststoffteil auch um ein dreidimensionales Kunststoffteil handeln. Weiterhin ist es möglich, dass es sich bei dem Kunststoffteil auch um Kunststoffteile umfassend einen Schichtaufbau wie beispielsweise Folien, Folienschichtverbunde und/oder Platten handeln kann, als auch um deren Kombinationen z.B. hinterspritzte Folien, die die vorstehend beschriebenen Polymere enthalten. Besonders bevorzugt ist das Kunststoffteil eine Folie, Folienschichtverbund und/oder eine Platte, enthaltend die vorstehend genannten Polymere, die durch Extrusion und/oder Coextrusion hergestellt werden.

In einer Ausführungsform umfasst das Kunststoffteil (A), insbesondere thermoplastische Kunststoffteil, ganz besonders thermoplastisches Kunststoffteil umfassend einen Schichtaufbau, wenigstens ein Additiv, welches im Wellenlängenbereich der eingesetzten fokussierten nicht-ionisierenden elektromagnetischen Strahlung ein Absorptionsmaximum aufweist, oder (A) wird mit wenigstens einem Additiv in Form eines Beschichtungsmittels beschichtet, welches im Wellenlängenbereich der eingesetzten fokussierten nicht-ionisierenden elektromagnetischen Strahlung ein Absorptionsmaximum aufweist.

Prinzipiell sind als Additiv alle lasersensitiven Additive geeignet, sogenannte Laser-Markier-Additive, d.h. solche aus einem Absorber im Wellenlängenbereich der zu verwendeten Strahlung (C). Vorzugsweise umfasst das Additiv mindestens einen oder mehrere organische und/oder anorganische IR-Absorber, vorzugsweise anorganische IR-Absorber. Solche Additive und deren Verwendung in Formmassen sind beispielsweise in WO-A 2004/50766 und WO-A 2004/50767 beschrieben und werden von der Fa. DSM unter dem Markennamen Micabs^{™} kommerziell angeboten.

Geeignete organische IR-Absorber sind beispielsweise Verbindungen, welche zwischen 700 und 2500 nm (Nahes Infrarot = NIR) eine möglichst hohe Absorption aufweisen. Geeignet sind beispielsweise literaturbekannte Infrarot-Absorber, wie sie z. B. in M. Matsuoka, Infrared Absorbing Dyes, Plenum Press, New York, 1990 stoffklassenmäßig beschrieben sind. Besonders geeignet sind Infrarot-Absorber aus den Stoffklassen der Azo-, Azomethin-, Methin- Anthrachinon-, Indanthron-, Pyranthron-, Flavanthron-, Benzanthron-, Phtalocyanin-, Perylen-, Dioxazin-, Thioindigo- Isoindolin-, Isoindolinon-, Chinacridon-, Pyrrolopyrrol- oder Chinophtalonpigmente sowie Metallkomplexe von Azo-, Azomethin- oder Methinfarbstoffen oder Metallsalzen von Azoverbindungen. Davon sind ganz besonders Phthalocyanine und Naphthalocyanine geeignet. Aufgrund der verbesserten Löslichkeit in thermoplastischen Kunststoffen sind Phthalocyanine und Naphthalocyanine mit sperrigen Seitengruppen vorzuziehen.

Geeignete anorganische IR-Absorber sind beispielsweise Mischoxide von Metallen wie z.B. phosphorhaltige Zinn-Kupfer-Mischoxide, wie z.B. in WO-A 2006/042714 beschrieben, solche aus der Gruppe der Boride und/oder der Wolframate sowie deren Mischungen, vorzugsweise mindestens einen oder mehrere IR-Absorber aus der Gruppe der Boride und/oder Wolframate, sowie deren Mischungen, besonders bevorzugt mindestens einen oder mehrere IR-Absorber aus der Gruppe der Wolframate.

Als anorganische IR-Absorber aus der Gruppe der Boride sind beispielsweise Verbindungen vom Typ MₓB_{y} (M= La, Ce, Pr, Nd, Tb, Dy, Ho, Y, Sm, Eu, ER, Tm, Yb, Lu, Sr, Ti, Zr, Hf, V, Ta, Cr, Mo, W und Ca; und x und y einer ganzen Zahl von 1 bis 6) wobei Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride geeignet.

Als anorganische IR-Absorber aus der Gruppe der Wolframate sind beispielsweise auch solche aus der Gruppe der Wolframverbindungen vom Typ W_{y}O_{z} (W = Wolfram, O = Sauerstoff; z/y = 2,20 - 2,99) und/oder MₓW_{y}O_{z} (M = H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,33}WO₃, Tl_{0,33}WO₃, K_{0,33}WO₃, Rb_{0,33}WO₃, Cs_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃ als anorganischem IR-Absorber ganz besonders bevorzugt. Ebenfalls bevorzugt sind Cs/W-Verhältnisse von 0,20 und 0,25.

Unter den anorganischen IR-Absorbern sind die Woframate den Boriden aufgrund ihrer geringen Eigenfärbung vorzuziehen, sofern das erfindungsgemäße Verfahren auf Kunststoffteilen erfolgen soll, die eine Strahlungsdurchlässigkeit von ≥ 10 % bis ≤ 99%, bevorzugt von ≥ 30 % bis ≤ 95 %, besonders bevorzugt ≥ 40 % bis ≤ 93% für die gewählte Strahlung aufweisen, bestimmt nach der Methode UV-VIS-NIR-MIR gemäß DIN EN ISO/IEC 17025 .

Zur Herstellung derartiger Wolframate werden z.B. Wolframtrioxid, Wolframdioxid, ein Hydrat eines Wolframoxids, Wolframhexachlorid, Ammoniumwolframat oder Wolframsäure und gegebenenfalls weitere Salze enthaltend das Element M, wie z.B. Cäsiumcarbonat, in bestimmten stöchiometrischen Verhältnisse gemischt, so dass die molaren Verhältnisse der einzelnen Komponenten durch die Formel MₓW_{y}O_{z} wiedergegeben werden. Diese Mischung wird anschließend bei Temperaturen zwischen 100 °C und 850 °C in einer reduzierenden Atmosphäre, z.B. einer Argon Wasserstoff-Atmosphäre, behandelt und abschließend das erhaltene Pulver bei Temperaturen zwischen 550 °C und 1200 °C unter Inertgasatmosphäre getempert. Zur Herstellung der erfindungsgemäßen anorganischen IR-Absorber-Nanopartikel kann der IR-Absorber mit den unten beschriebenen Dispergiermitteln und weiteren organischen Lösemitteln, wie z.B. Toluol, Benzol oder ähnlichen aromatischen Kohlenwasserstoffen vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt. Bevorzugt sind Nanopartikel, die eine mittlere Größe kleiner als 200 nm, besonders bevorzugt kleiner als 100 nm, aufweisen. Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Herstellung der erfindungsgemäßen Wolframate ist z.B. in EP-A 1 801 815 genauer beschrieben und sie sind kommerziell z.B. bei der Firma Sumitomo Metal Mining Co., Ltd. (Japan) unter der Bezeichnung YMDS 874 erhältlich.

Beispielsweise für deren Einsatz in Kunststoffteilen (A) umfassend transparente Thermoplaste mit einer Strahlungsdurchlässigkeit für die gewählte Strahlung von ≥ 10 % bis ≤ 99%, bevorzugt von ≥ 30 % bis ≤ 95 %, besonders bevorzugt ≥ 40 % bis ≤ 93%, bestimmt nach der Methode UV-VIS-NIR-MIR gemäß DIN EN ISO/IEC 17025 , werden die so erhaltenen Partikel in einer organischen Matrix dispergiert, z.B. in einem Acrylat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen.

Geeignete Polymer-basierte Dispergiermittel sind vor allem Dispergiermittel, die eine hohe Transmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat und Polyester besonders bevorzugt sind. Es können auch Mischungen dieser Polymere oder auch Copolymere auf Acrylat-basis eingesetzt werden. Derartige Dispergierhilfsmittel und Methoden zur Herstellung von Wolframatdispersionen sind z.B. in der JP 2008214596 sowie in Adachi et al. J. Am. Ceram. Soc. 2007, 90 4059-4061, beschrieben. Geeignete Dispergiermittel sind kommerziell erhältlich.

Insbesondere sind Dispergiermittel auf Polyacrylat-Basis geeignet. Derart geeignete Dispergiermittel sind z.B. unter den Handelsnamen EFKA^{™}, z.B. EFKA^{™} 4500 und EFKA^{™} 4530 bei Ciba Specialty Chemicals erhältlich. Polyesterhaltige Dispergiermittel sind ebenfalls geeignet. Sie sind beispielsweise unter den Handelsnamen Solsperse^{™}, z.B. Solsperse^{™} 22000, 24000SC, 26000, 27000 von Avecia erhältlich. Ferner sind polyetherhaltige Dispergiermittel z.B. unter den Handelsnamen Disparlon^{™} DA234 und DA325 der Firma Kusumoto Chemicals bekannt. Auch Polyurethan basierte Systeme sind geeignet. Polyurethan-basierte Systeme sind unter dem Handelsnamen EFKA^{™} 4046, EFKA^{™} 4047 von Ciba Specialty Chemicals erhältlich. Texaphor^{™} P60 und P63 sind entsprechende Handelsnamen der Cognis.

Die Menge des IR-Absorbers im Dispergiermittel kann 0,2 Gew.-% bis 50,0 Gew.-%, bevorzugt 1,0 Gew.-% - 40,0 Gew.-%, weiter bevorzugt 5,0 Gew.-% - 35,0 Gew.-%, und am stärksten bevorzugt 10,0 Gew.-% - 30,0 Gew.-% bezogen auf die erfindungsgemäß eingesetzte Dispersion des anorganischen IR-Absorbers betragen. In der Gesamtzusammensetzung der gebrauchsfertigen IR- Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Hinsichtlich der Menge der erfindungsgemäßen anorganischen IR-Absorbern, besonders bevorzugt solche aus der Gruppe der Wolframate, in den Polymer-Zusammensetzungen der Kunststoffteile liegen keinerlei Beschränkungen vor. Üblicherweise können die anorganischen IR-Absorber, insbesondere die Wolframate, aber in einer Menge von ≥ 0,7% Gew.-% bis ≤ 4,5 Gew.- %, bevorzugt ≥ 0,6 Gew.-% bis ≤ 2 Gew.-% und besonders bevorzugt ≥ 0,7 Gew.-% bis ≤ 1,5 Gew.-%> berechnet als Feststoffanteil an anorganischem IR-Absorber, in der Polymer-Gesamtzusammensetzung eingesetzt werden.

Feststoffanteil an anorganischem IR-Absorber, insbesondere Wolframat, meint in diesem Zusammenhang den anorganischen IR-Aborber, insbesondere das Wolframat, als Reinstoff und nicht eine Dispersion, Suspension oder andere Zubereitung, enthaltend den Reinstoff, wobei sich auch die folgenden Angaben für Gehalt an IR-Additiv, insbesondere den Wolframatgehalt, immer auf diesen Feststoffanteil beziehen, soweit nicht explizit anders angegeben.

In einer weiteren Ausführungsform können optional neben den Wolframaten als IR-Absorber zusätzlich weitere IR-Absorber verwendet werden, wobei deren Anteil bezüglich Menge in einer derartigen Mischung aber jeweils unterhalb derer der oben beschriebenen Wolframate liegt. Bei Mischungen sind hierbei Zusammensetzungen bevorzugt, die zwei bis einschließlich fünf und besonders bevorzugt zwei oder drei unterschiedliche IR-Absorber enthalten. Der weitere IR-Absorber ist vorzugsweise ausgewählt aus der Gruppe der Boride und Zinnoxide, besonders bevorzugt LaB₆ oder Antimon dotiertes Zinnoxid oder Indiumzinnoxid enthält.

Derartige Mischungen von IR- Absorber finden überwiegend bei Anwendungen statt, bei welchen eine Eigenfärbung des Bauteils bis zu einem Delta E von 20, vorzugsweise bis zu einem Delta E von 15, im Vergleich zum Kunststoffteil ohne IR-Absorber akzeptiert werden kann.

In einer alternativen Ausführungsform der Erfindung kann das Kunststoffteil mit einem Additiv in Form eines Beschichtungsmittels beschichtet sein, welches im Wellenlängenbereich der eingesetzten fokussierten nicht-ionisierenden elektromagnetischen Strahlung ein Absorptionsmaximum aufweist. Vorzugsweise umfassen diese Beschichtungsmittel einen IR-Absorber, welche im Bereich der Wellenlänge von ≥ 0,70 µm bis ≤ 1000 µm, vorzugsweise im Bereich von ≥ 1,0 µm bis ≤ 50 µm, besonders bevorzugt im Bereich von ≥ 1,0 µm bis ≤ 2,5 µm absorbieren. Diese Beschichtungsmittel sind beispielsweise unter Clearweld^{™} kommerziell erhältlich unter der Bezeichnung LD920, LD930 oder LD940.

Das wenigstens eine Additiv, welches im Wellenlängenbereich der eingesetzten fokussierten nicht-ionisierenden elektromagnetischen Strahlung ein Absorptionsmaximum aufweist kann im Kunststoffteil enthalten sein.

Das Färbungsbad (B) kann mindestens ein Farbmittel, vorzugsweise mindestens einen Farbstoff, besonders bevorzugt mindestens einen Farbstoff der Gruppe Solvent Dyes und/oder Dispers Dyes gemäß Klassifizierung des Colour Index oder Mischungen aus diesen Farbstoffen umfassen.

Der Colour Index (CI) der Society of Dyers and Colourists und der American Association of Textile Chemists and Colorists charakterisiert alle Farbmittel eindeutig durch den Gruppennamen und den Zahlen für die chemische Zusammensetzung bzw. chemische Struktur.

Farbstoffe der Gruppe der Solvent Dyes gemäß Klassifizierung des Colour Index können beispielsweise die sogenannten Macrolex^{™} Farbstoffe der Firma Lanxess AG, Deutschland sein. Beispielhaft genannt sind Macrolex^{™} Blau 3R, Macrolex^{™} Rot H, Macrolex^{™} Gelb 6G (Solvent Yellow 179 gemäß CI), Macrolex^{™} Violet Rot R (Dispers Violet 31 gemäß CI), Macrolex^{™} orange R (Solvent Orange 107 gemäß CI) oder Mischungen aus diesen Farbstoffe.

Farbstoffe der Gruppe der Dispers Dyes gemäß Klassifizierung des Colour Index können beispielsweise Diazo-, Diphenylamin- und Anthrachinonverbindungen, Acetatfarbstoffe, Dispersionsfarbstoffe und/oder Dispersolfarbstoffe sein und schließen Dispers-Blau #3, Dispers-Blau #14, Dispers-Gelb #3, Dispers-Rot #134 und Dispers-Rot#7 ein. Die Klassifikation und Bezeichnung der vorstehend zitierten Farbstoffe stimmen mit "The Colour Index", 3. Ausgabe, gemeinsam veröffentlicht von the Society of Dyes and Colors und the American Association of Textile Chemists and Colorists (1971) überein. Die Farbstoffe können ganz allgemein entweder als einziger Farbstoffbestandteil oder als Komponente einer Mischung in Abhängigkeit von der gewünschten Farbe angewandt werden. Somit schließt der hier verwendete Begriff des Farbstoffs auch die Farbstoffmischung ein.

Unter den geeigneten Farbstoffen sind wasserunlösliche Diazo-Diphenylamin- und Anthrachinonverbindungen zu nennen. Besonders geeignet sind Acetat-Farbstoffe, dispergierte Acetat-Farbstoffe, Dispersionsfarbstoffe und Dispersol-Farbstoffe, wie sie im Colour Index 3. Auflage, Band 2, The Societey of Dyers and Colourists, 1971. S. 2479 bzw. 2187-2743 offenbart sind.

Die bevorzugten dispergierten Farbstoffe schließen Dystar's Palanil Blau E-R150 (Anthrachinon/Dispers-Blau), DIANIX Orange E-3RN (Azofarbstoff/Cl Dispers-Orange 25) und die vorstehend genannten Macrolex^{™} Farbstoffe als Solvent Dyes ein.

In einer Ausführungsform umfasst das Färbungsbad:
a) Lösungsmittel und/oder Dispergiermittel, vorzugsweise Wasser und/oder organisches Lösungsmittel, besonders bevorzugt Wasser
b) Farbmittel, vorzugsweise einen Farbstoff, besonders bevorzugt einen Farbstoff der Solvent Dyes und/oder Dispers Dyes gemäß Klassifizierung des Colour Index.

Vorteilhaft haben sich solche Färbungsbäder erwiesen, die zum gleichmäßigen Einfärben von Polycarbonat-Kunststoffteilen bei Temperaturen > 80 °C geeignet sind. Diese werden beispielsweise beschrieben in WO-A 03/ 040461, EP-A 2050866, WO-A 03/083207. Unter den Bedingungen des erfindungsgemäßen Verfahrens erfolgt im Wesentlichen eine partielle Einfärbung des Kunststoffteils an den bestrahlten Bereichen, so dass genau an diesen Stellen eine intensive Gravur sichtbar wird.

In einer weiteren Ausführungsform der Erfindung umfasst daher das Färbungsbad zusätzlich zu den bereits genannten Komponenten a) und b)
c) mindestens ein weiteres Lösungsmittel gemäß der Strukturformel (IV)

   R-[(O-(CH₂)ₘ)ₙ-]OH (IV),

   worin R ein Ethyl-, Propyl- oder Butylrest,
   m 2, 3 oder 4 und
   n 1, 2 oder 3 sind,
   mit der Maßgabe, dass wenn R Butyl ist, m 2 oder 4 ist,
d) mindestens ein Nivelliermittel gemäß der Strukturformel (V):

   H-[(O-(CH₂)ₘ)ₙ-]OH (V),

   worin m 2, 3 oder 4 und
   n 1, 2 oder 3 sind.

Die Komponenten a) bis d) können in den folgenden Mengen bezogen auf das Gesamtgewicht des Färbungsbades enthalten sein:
a) 50,0 bis 99,99 Gew.-%, vorzugsweise 62,5 bis 90,0 Gew.-%, besonders bevorzugt 65,0 bis 85,0 Gew.-%,
b) 0,01 bis 15,0 Gew.-%, vorzugsweise 0,1 bis 5,0 Gew.-%, besonders bevorzugt 0,2 bis 4,0 Gew.-%,
c) 0 bis 35,0 Gew.-%, vorzugsweise 1,0 bis 30,0 Gew.-%, besonders bevorzugt 5,0 bis 25,0 Gew.-%,
d) 0 bis 30,0 Gew.-%, vorzugsweise 1,0 bis 20,0 Gew.-%, besonders bevorzugt 3,0 bis 15,0 Gew.-%.

Bevorzugt sind die Komponenten a) bis d) in den folgenden Mengen in dem Färbungsbad, bezogen auf das Gesamtgewicht des Färbungsbades enthalten:
a) 50,0 bis 99,99 Gew.-%, vorzugsweise 62,5 bis 90,0 Gew.-%, besonders bevorzugt 65,0 bis 85,0 Gew.-%,
b) 0,01 bis 25 Gew.-%, vorzugsweise 0,1 bis 20 Gew.-%, besonders bevorzugt 0,2 bis 18 Gew.-%,
c) 0 bis 35,0 Gew.-%, vorzugsweise 1,0 bis 30,0 Gew.-%, besonders bevorzugt 5,0 bis 25,0 Gew.-%,
d) 0 bis 30,0 Gew.-%, vorzugsweise 1,0 bis 20,0 Gew.-%, besonders bevorzugt 3,0 bis 15,0 Gew.-%.

In einer weiteren Ausführungsform des erfindungsgemäßen Verfahren umfasst das Färbungsbad einen Farbstoff und/oder eine Farbstoffmischung ausgewählt aus der Gruppe der Dispers Dyes gemäß Klassifizierung des Colour Index, ganz besonders einen Farbstoff ausgewählt aus der Gruppe bestehend aus Azo-, Diphenylamin- und Anthrachinonverbindungen.

In einer anderen bevorzugten Ausführungsform des erfindungsgemäßen Verfahrens umfasst das Färbungsbad einen Farbstoff und/oder eine Farbstoffmischung aus der Gruppe der Solvent Dyes gemäß Klassifizierung des Colour Index, ganz besonders bevorzugt einen Farbstoff und/oder Farbstoffmischung der Makrolex^{™} Farbstoffe.

Als Lösungsmittel und/oder Dispergiermittel a) kann Wasser und/oder organische Lösungsmittel eingesetzt werden. Vorzugsweise wird Wasser eingesetzt.

Als organische Lösungsmittel kommen alle gängigen Lösungsmittel in Frage, die das Kunststoffteil bei Kontakt nicht angreifen. Beispielhaft genannt sind Butylalkohol, Butylenglykol, Diethylenglykol, Ethylalkohol, Ethylenglykol, Heptan, Hexan, Pentan, Propargylalkohol, Propylalkohol oder Mischungen der vorstehend genannten.

Vorzugsweise wird im erfindungsgemäßen Verfahren Wasser und c) eingesetzt.

Die Bestrahlung des Kunststoffteils (A) in Schritt ii) erfolgt mit fokussierter nicht-ionisierender elektromagnetischer Strahlung, wobei der Wellenlängenbereich der fokussierten nicht-ionisierenden elektromagnetischen Strahlung so gewählt wird, dass das Färbungsbad eine Strahlungsdurchlässigkeit von ≥ 2 % bis ≤ 99%, bevorzugt von ≥ 30 % bis ≤ 95 %, besonders bevorzugt ≥ 40 % bis ≤ 93% für die gewählte Strahlung aufweist, bestimmt nach der Methode UV-VIS-NIR-MIR gemäß DIN EN ISO/IEC 17025

In einer vorteilhaften Ausführungsform der Erfindung erfolgt die Bestrahlung in Schritt ii) mit Laserstrahlung, mit einer Wellenlänge im Bereich von ≥ 0,1µm bis ≤ 1000 µm, vorzugsweise von ≥ 1,0 µm bis ≤ 50 µm, besonders bevorzugt von ≥ 1,0 µm bis ≤ 2,5 µm.

Sofern die Bestrahlung mit dem Laser erfolgt, kann dies im Dauerstrichbetrieb (CW-Laser) erfolgen. Besonders bevorzugt wird gepulste Laserstrahlung für die Bestrahlung der Kunststoffteile eingesetzt. Hierbei ist bereits eine Pulsdauer des Lasers von Bruchteilen von Sekunden ausreichend, um an den Laser-bestrahlten Stellen eine Färbung des Kunststoffteils zu erzielen. Vorzugsweise werden Pulsdauern von 10⁻¹⁸ bis 10⁻¹ Sekunden, besonders bevorzugt Pulsdauern von 10⁻⁹ bis 10⁻² Sekunden, ganz besonders bevorzugt Pulsdauern von 10⁻⁶ bis 10⁻³ Sekunden eingesetzt.

Durch Variation der Leistung des eingesetzten Laserstrahls für die Bestrahlung in Schritt ii) kann die Intensität der Einfärbung an den gelaserten Stellen beeinflusst werden, je nachdem welche Anforderung an die gewünschte Anwendung gestellt wird. Je höher die eingesetzte Laserleistung ist, desto intensiver wird die Einfärbung an den gelasterten Stellen des Kunststoffteils. Mit dem mittleren Leistungsbereich eines 7,5 Watt Markierungslasers können ausreichend gute farbige Gravuren erzielt werden. Im Pulsbetrieb können signifikant höhere Leistungen und damit auch intensivere Einfärbungen im Kunststoffteil erzielt werden.

Durch Variation der Frequenz des eingesetzten Laserstrahls für die Bestrahlung in Schritt ii) kann gesteuert werden ob eine Karbonisierung der Kunststoffoberfläche erfolgen soll, und damit die Erzeugung von grauen oder schwarzen Gravuren, oder ob die Gravur in Farbe z.B. Blau, Magenta, Gelb erfolgen soll. Vorzugsweise werden im erfindungsgemäßen Verfahren NdYAG-Laser (Neodym-dotierte Yttrium-Aluminium-Granat-Laser) eingesetzt und damit Kunststoffteile aus Polycarbonat graviert. Bei einer Pulsfrequenz von bis zu 25 kHz können in Kunststoffteilen aus Polycarbonat noch Gravuren in grauer Farbe erreicht werden. Bei höheren Frequenzen (>25 kHz) und damit niedrigeren Energiedichten reicht die Energie des Lasers nicht mehr aus, um schwarz bzw. graue Einfärbungen zu erreichen, jedoch kann die Gravur in Blau, Magenta, Gelb bei diesen Energiedichten immer noch erfolgen.

Vorzugsweise werden im erfindungsgemäßen Verfahren NdYAG-Laser (Neodym-dotierte Yttrium-Aluminium-Granat-Laser) eingesetzt. Je kürzer die Pulse desto höher die Pulsspitzenleistungen. Bei Pulslängen von 15 ns bis 400 ns können Pulsspitzen von 100 kJ erzielt werden. Es können aber für das farbige Lasergravieren von Kunststoffteilen auch solche Lasertypen eingesetzt werden, die für das Gravieren und Schweißen von Kunststoffen geeignet sind. So kann beispielsweise auch ein CO₂-Laser eingesetzt werden. Damit kann bevorzugt die Gravur in Blau, Magenta, Gelb erfolgen.

Die Farbkonzentration des Färbungsbads kann auch einen Einfluss auf die Intensität der partiellen Einfärbung des Kunststoffteils nach der Bestrahlung haben. Bevorzugt ist eine Konzentration an Farbmittel, vorzugsweise Farbstoff von 0,01 bis 25 Gew.-%, vorzugsweise 0,1 bis 20 Gew.-%, besonders bevorzugt 0,2 bis 18 Gew.-%, bezogen auf das Gesamtgewicht des Färbungsbads.

In einer Ausführungsform des erfindungsgemäßen Verfahrens wird ein Formteil aus Kunststoff, welches in einem Spritzgießwerkzeug nach bekannten Verfahren wie beispielsweise gemäß dem In-Mold-Decoration (IMD), Film-Insert-Molding (FIM) oder High-Pressure-Forming (HPF) Verfahren hergestellt wird, eingesetzt.

In einer weiteren Ausführungsform des erfindungsgemäßen Verfahrens handelt es sich bei dem Kunststoffteil um einen Schichtaufbau, enthaltend wenigstens eine Schicht eines thermoplastischen Kunststoffes ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Poly- oder Copolykondensat(e) der Terephthalsäure, Poly- oder Copolykondensate der Naphthalindicarbonsäure, Poly- oder Copolykondensat(e) wenigstens einer Cycloalkyldicarbonsäure, oder Mischungen aus diesen, besonders bevorzugt um ein oder mehrere Polycarbonat(e) oder Copolycarbonat(e) auf Basis von Diphenolen oder Blends enthaltend wenigstens ein Polycarbonat oder Copolycarbonat.

Ganz besonders bevorzugt handelt es sich bei der wenigstens einen Schicht enthaltend wenigstens einen thermoplastischen Kunststoff um eine Folie. Vorzugsweise weist diese Folie eine Schichtdicke von ≥ 1 µm bis ≤ 1000 µm, bevorzugt ≥5 bis ≤ 800 µm, ganz besonders bevorzugt ≥ 10 bis ≤ 500 µm.

Zur Vermeidung von Wiederholungen wird im Folgenden auf die vorstehenden Ausführungen des thermoplastischen Kunststoffs hinsichtlich bevorzugten Ausführungsformen, Material, Zusammensetzung und Additiven verwiesen.

In einer weiteren Ausführungsform umfasst der Schichtaufbau
wenigstens eine Schicht enthaltend wenigstens einen thermoplastischen Kunststoff wie vorstehend beschrieben, und
wenigstens eine weitere Schicht enthaltend wenigstens einen thermoplastischen Kunststoff wie vorstehend beschrieben und wenigstens ein lasersensibles Additiv, vorzugsweise Schwarzpigment, besonders bevorzugt Ruß. Solche Schichtaufbauten sind beispielsweise bekannt aus WO-A 2010/089035 und eignen sich zum Lasergravieren in Schwarz-Weiß, insbesondere für die personalisierte Lasergravur von Sicherheitsdokumenten, und ganz besonders von Identifikationsdokumenten.

In einer anderen Ausführungsform des erfindungsgemäßen Schichtaufbaus kann wenigstens eine Schicht enthaltend wenigstens einen thermoplastischen Kunststoff zudem wenigstens einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Das Füllen einer Schicht enthaltend wenigstens einen thermoplastischen Kunststoff mit wenigstens einem solchen Füllstoff verbessert die Sichtbarkeit der eingebrachten Beschriftung bzw. Abbildung(en), wodurch auch die Wahrnehmung der verbesserten Schärfe und Auflösung weiter erhöht wird. Dieser Schichtaufbau ist bekannt aus der WO-A 2010/089035 und wird dort ausführlich beschrieben.

In einer weiteren Ausführungsform des erfindungsgemäßen Schichtaufbaus, kann der Schichtaufbau wenigstens eine Schicht eines thermoplastischen Kunststoffs wenigstens ein Additiv umfassen, welches im Wellenlängenbereich der eingesetzten fokussierten nicht-ionisierenden elektromagnetischen Strahlung ein Absorptionsmaximum aufweist, und wobei diese wenigstens eine Schicht eines thermoplastischen Kunststoffs einer Strahlungsdurchlässigkeit von ≥ 10 % bis ≤ 99%, bevorzugt von ≥ 30 % bis ≤ 95 %, besonders bevorzugt ≥ 40 % bis ≤ 93%, für die gewählte Strahlung aufweist, bestimmt nach der Methode UV-VIS-NIR-MIR gemäß DIN EN ISO/IEC 17025, vorzugsweise ein anorganischer IR-Absorbern, besonders bevorzugt ein anorganischer IR-Absorber aus der Gruppe der Wolframate. Vorzugsweise bildet diese Schicht eine äußere Schicht des Schichtaufbaus, die letztendlich auch farbig lasergraviert wird.

In einer weiteren Ausführungsform des erfindungsgemäßen Schichtaufbaus umfasst dieser wenigstens eine äußere Schicht eines thermoplastischen Kunststoffs enthaltend wenigstens ein Additiv, welches im Wellenlängenbereich der eingesetzten fokussierten nicht-ionisierenden elektromagnetischen Strahlung ein Absorptionsmaximum aufweist, und wobei diese wenigstens eine Schicht eines thermoplastischen Kunststoffs eine Strahlungsdurchlässigkeit von ≥ 10 % bis ≤ 99%, bevorzugt von ≥ 30 % bis ≤ 95 %, besonders bevorzugt ≥ 40 % bis ≤ 93%, für die gewählte Strahlung aufweist, bestimmt nach der Methode UV-VIS-NIR-MIR gemäß DIN EN ISO/IEC 17025, vorzugsweise ein anorganischer IR-Absorber, besonders bevorzugt ein anorganischer IR-Absorber aus der Gruppe der Wolframate, und eine weitere Schicht enthaltend wenigstens einen thermoplastischen Kunststoff und wenigstens ein lasersensibles Additiv, vorzugsweise Schwarzpigment, besonders bevorzugt Ruß und gegebenenfalls eine weitere Schicht eines thermoplastischen Kunststoffs umfassend einen Füllstoff, vorzugsweise ein Weißpigment, besonders bevorzugt Titandioxid, Zirkoniumdioxid oder Bariumsulfat, ganz besonders bevorzugt Titandioxid.

Diese Ausführungsform ermöglicht beispielsweise die erfindungsgemäße farbige Lasergravur mit der schwarzen Lasergravur zu kombinieren. Hierzu kann das Kunststoffteil (A), umfassend den vorstehend beschriebenen Schichtaufbau, entweder vor Schritt i) und/oder nach Schritt ii) in Abwesenheit des Färbungsbades (B) wie in Schritt ii) mit C) bestrahlt werden. Idealerweise kann die gleiche Strahlung (C) für diese weitere Bestrahlung eingesetzt werden. Durch die Bestrahlung mit (C) in Abwesenheit des Färbungsbades (B) kann eine schwarze Gravur auf die Oberfläche, vorzugsweise in darunter liegenden transparenten und/oder weißen Schichten des Schichtaufbaus an der gewünschten Stelle aufgebracht werden. Die hohe Laserreaktivität dieser Schichtaufbauten führt bei Lasergravur außerhalb des Färbungsbads zu einer Schwärzung an den mit Laser bestrahlten Stellen. Befindet sich der Schichtaufbau im Färbungsbad, dann wird die Intensität des Laserstrahls durch das Färbungsbad so gemindert, so dass lediglich eine Färbung an den bestrahlten Stellen erfolgt, aber keine Schwärzung der Oberfläche des Schichtaufbaus verursacht wird.

In einer nicht erfindungsgemäßen Alternative zu dem Färbungsbad kann die partielle Einfärbung des Kunststoffteils (A) auch mittels einer Färbungsschicht b), die mindestens ein Farbmittel enthält erfolgen, welche in einem ersten Schritt i') erzeugt wird.

Ein solches nicht erfindungsgemäßes Alternativ-Verfahren zum partiellen Einfärben, insbesondere farbigen Lasergravieren, von Kunststoffteilen, bevorzugt von thermoplastischen Kunststoffteilen, ganz besonders bevorzugt von thermoplastischen Kunststoffteilen umfassend einen Schichtaufbau, umfasst mindestens die Schritte:
i') Erzeugen einer mindestens teilflächigen Färbungsschicht b) auf einem Kunststoffteil (A);
ii') Bestrahlung des Kunststoffteils (A) aus i') mit nicht-ionisierender elektromagnetischer Strahlung (C),
wobei die partielle Einfärbung im Wesentlichen nur an den in Schritt i') mit der Farbschicht b) bedeckten Stellen oder an den in Schritt ii') bestrahlten Stellen erfolgt, wobei der Wellenlängenbereich der nicht-ionisierenden elektromagnetischen Strahlung (C) so gewählt wird, dass die Färbungsschicht b) eine Strahlungsdurchlässigkeit von ≥ 0,1 % bis ≤ 99%, bevorzugt von ≥ 0,5 % bis ≤ 95 %, besonders bevorzugt ≥ 0,9 % bis ≤ 93% für die gewählte Strahlung aufweist, bestimmt nach der Methode UV-VIS-NIR-MIR gemäß DIN EN ISO/IEC 17025. Das Kunststoffteil (A) weist vor, während oder nach dem Bestrahlen in Schritt ii) eine Temperatur in einem Bereich von ≤ 99 °C bis ≥ -60 °C, bevorzugt von ≤ 70 °C bis ≥ -40 °C, besonders bevorzugt von ≤ 50 °C bis ≥ -15 °C auf, wobei die Temperatur des Kunststoffteils (A) während der Dauer des Verfahrens in einem Tempertaturbereich von 100 °C variieren kann. Bevorzugt weist die Färbungsschicht b) eine Dicke von 0,001 mm bis 10 mm, besonders bevorzugt von 0,005 mm bis 5 mm, ganz besonders bevorzugt von 0,01 mm bis 1 mm auf. Bevorzugt tritt die fokussierte nicht-ionisierende elektromagnetische Strahlung (C) vor dem Auftreffen auf das Kunststoffteil (A) durch eine Platte (D) umfassend ein oder mehrere strahlungsauskoppelnde Materialien.

Bevorzugt ist die nicht-ionisierende elektromagnetische Strahlung (C) Laserstrahlung mit einer Wellenlänge im Bereich von ≥ 0,1 µm µm bis ≤ 1000 µm, vorzugsweise im Bereich von ≥ 1,0 µm bis ≤ 50 µm, besonders bevorzugt im Bereich von ≥ 1,0 µm bis ≤ 2,5 µm.

In Schritt i') des des nicht erfindungsgemäßen Alternativ-Verfahrens wird die Färbungsschicht b) bevorzugt als eine feste oder eine flüssige Schicht auf dem Kunststoffteil (A) aufgebracht, sodass das Kunststoffteil (A) mindestens partiell mit der Färbungsschicht b) benetzt ist. Eine feste Schicht kann mittels Trocknen der flüssig aufgebrachten Färbungsschicht b) erzeugt werden. Zum Aufbringen einer flüssigen Schicht auf dem Kunststoffteil (A) wird bevorzugt ein Verfahren eingesetzt ausgewählt aus der Gruppe bestehend aus Sprühen, Beschichten, Gießen, Eintauchen und Drucken, wie Ink-Jet, Siebdruck, Offsetdruck, Tiefdruck, Rakeln, Tiefdruck, Tampondruck oder einer Kombination aus mindestens zwei hiervon. In diesem Alternativ Verfahren wird das partielle Einfärben dadurch erreicht, dass nur an bestimmten Stellen auf dem Kunststoffteil (A) Farbmittel in Form der Farbschicht b) aufgebracht wird. Das Bestrahlen in Schritt ii') kann teilflächig oder vollflächig erfolgen, je nachdem, ob das Farbmittel vollflächig oder teilflächig auf das Kunststoffteil (A) aufgebracht wird. So wird im Fall, dass das Farbmittel in Firm der mindestens teilflächigen Farbschicht b) vollflächig in Schritt i') aufgebracht wird, das Bestrahlen in Schritt ii') teilflächig vorgenommen. Im Fall, dass das Farbmittel in Form der mindestens teilflächigen Farbschicht b) partiell auf das Kunststoffteil (A) aufgebracht wird, kann das Bestrahlen in Schritt ii') auch vollflächig erfolgen. Das Farbmittel und seine Zusammensetzung wurde bereits im Zusammenhang mit dem ersten erfindungsgemäßen Verfahren beschrieben.

Bei vollflächigem Auftrag der Färbungsschicht b) auf das Kunststoffteil (A) in Schritt i') und partiellem Bestrahlen in Schritt ii') wird der nicht bestrahlte Teil der Färbungsschicht b) bevorzugt nach Schritt ii') entfernt. Die Entfernung der Färbungsschicht b) kann z.B. in einem Wasserbad erfolgen, unterstützt durch Ultraschall- Reinigung, oder durch Unterstützung von mechanischen Reinigungsmitteln wie Schwämmen, Bürsten welche zusätzlich durch einen Motor angetrieben werden können (Rotation, Oszillation, Vibration usw.).

Die vorstehend im Zusammenhang mit dem erfindungsgemäßen Verfahren beschriebenen Vorzugsbereiche und Ausführungsformen für (A) bis (E) gelten, wenn vorhanden, auch für das nicht erfindungsgemäße Alternativ-Verfahren und sind dafür genauso anwendbar. Daher wird hierfür auf das Vorstehende verwiesen um Wiederholungen zu vermeiden.

Die Farbkonzentration der Färbungsschicht kann auch einen Einfluss auf die Intensität der partiellen Einfärbung des Kunststoffteils nach der Bestrahlung haben. Bevorzugt weist die Färbungsschicht b) eine Konzentration an Farbmittel, vorzugsweise Farbstoff von 0,01 bis 98 Gew.-%, vorzugsweise von 0,1 bis 50 Gew.-%, besonders bevorzugt von 0,2 bis 25 Gew.-%, bezogen auf das Gesamtgewicht der Färbungsschicht b) auf.

Die Farbschichtdicke wird bevorzugt während des gesamten Verfahrens exakt eingestellt und wird bevorzugt während der Dauer des gesamten Verfahrens konstant gehalten, um eine partielle Einfärbung hoher Intensität und Schärfe zu erzielen. Die Farbschichtdicke ist bevorzugt 0,001 mm bis 10 mm aufweisen, besonders bevorzugt von 0,005 mm bis 5 mm, ganz besonders bevorzugt von 0,01 mm bis 1 mm betragen.

Weiterer Gegenstand der Erfindung ist das in Anspruch 15 definierte Sicherheitsdokument Insbesondere die nach dem erfindungsgemäßen Verfahren personalisierten bzw. farbig gravierten Sicherheitsdokumente zeichnen sich durch eine hohe Fälschungssicherheit der aufgebrachten personalisierten bzw. farbig gravierten Information aus. Mit dem erfindungsgemäßen Verfahren können Blancodokumente dezentral und fälschungssicher in Farbe personalisiert werden. Zusätzlich ist es möglich taktile Lasergravuren in Farbe zu erstellen, was bislang nur in schwarz möglich war.

Es können auch Kunststoffartikel, insbesondere Sicherheits- und/oder Wertdokumente, ganz besonders Identifikationsdokumente, nach dem nicht erfindungsgemäßen Alternativ-Verfahren erhältlich sein. Auch diese Dokumente zeichnen sich durch eine hohe Fälschungssicherheit der aufgebrachten personalisierten bzw. farbig gravierten Informationen aus.

Weiterer Gegenstand der Erfindung ist die in Anspruch 16 definierte Vorrichtung.

In einer bevorzugten Ausführungsform der Vorrichtung kann die Temperatur während der Dauer des Verfahrens in einem Tempertaturbereich von 100 °C, bevorzugt von 80 °C, besonders bevorzugt von 50 °C, weiterhin bevorzugt von 30 °C, mehr bevorzugt von 20 °C variieren. Variiert die Temperatur nicht mehr als 10 °C, wird die als konstante Temperatur betrachtet.

Die vorstehend beschriebenen Vorzugsbereiche und Ausführungsformen für (A) bis (E) gelten auch für die Vorrichtung. Daher wird hierauf auf das Vorstehende verwiesen um Wiederholungen zu vermeiden.
Figur 1 zeigt eine mögliche Ausführungsform der erfindungsgemäßen Vorrichtung für das partielle Einfärben von zweidimensionalen Kunststoffteilen.
Figur 2 zeigt eine mögliche Ausführungsform der erfindungsgemäßen Vorrichtung für das partielle Einfärben von dreidimensionalen Kunststoffteilen.

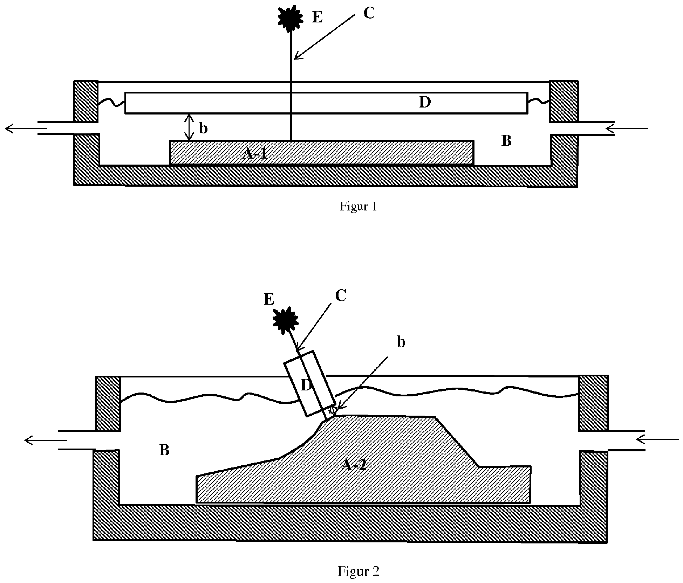

Die Bezugszeichen in Figur 1 und 2 sind wie folgt:
A-1: zweidimensionales Kunststoffteil, vorzugsweise thermoplastisches Kunststoffteil, besonders bevorzugt thermoplastisches Kunststoffteil umfassend einen Schichtaufbau
A-2: dreidimensionales Kunststoffteil, vorzugsweise thermoplastisches dreidimensionales Kunststoffteil
B: Färbungsbad oder Färbungsschicht in flüssiger Form
C: fokussierter nicht-ionisierender elektromagnetischer Strahlung
D: Platte umfassend ein oder mehrere strahlungsauskoppelnde Materialien
E: Strahlungsquelle zur Erzeugung fokussierter nicht-ionisierender elektromagnetischer Strahlung
b: Tauchtiefe oder Farbschichtdicke

In Figur 1 wird ein Färbungsbad B schematisch gezeigt, in den ein zweidimensionales Kunststoffteil A-1 so eingetaucht ist, dass mindestens eine seiner Oberflächen mit dem Farbmittel, das sich in dem Färbungsbad B befindet in Kontakt kommt. Oberhalb der mit dem Färbungsbad B befindlichen Oberfläche des zweidimensionales Kunststoffteils A-1 befindet sich in einem wohldefinierten Abstand b, auch Tauchtiefe oder Farbschichtdicke genannt, eine Platte D, umfassen ein oder mehrere strahlungsauskoppelnde Materialien. Während des erfindungsgemäßen Verfahrens wird aus einer Strahlungsquelle zur Erzeugung fokussierter nicht-ionisierender elektromagnetischer Strahlung E fokussierter nicht-ionisierende elektromagnetische Strahlung C auf die Oberfläche des Kunststoffteil A-1 gerichtet, um partiell eine Färbung des Kunststoffteil A-1 vorzunehmen. Das Färbungsbad B kann einen Ablauf und einen Zulauf für das Farbmittel aufweisen, sodass kontinuierlich frisches Farbmittel in das Färbungsbad B eingebracht werden kann, um beispielsweise das Färbungsbad B auf einer im Wesentlichen konstanten Temperatur zu halten. Die Strahlungsquelle E kann in mindestens zwei Dimensionen beweglich gegenüber dem Kunststoffteil A-1 und der Platte D angeordnet sein, sodass unterschiedliche Bereiche auf der Oberfläche des Kunststoffteil A-1 bestrahlt werden können.

In dem nicht erfindungsgemäßen Alternativ-Verfahren ist die Platte D optional und das Färbungsbad B kann so mit dem Kunststoffteil A-1 in Kontakt stehen, dass lediglich Teile der Oberfläche des Kunststoffteil A-1 mit Farbmittel bedeckt sind.

In Figur 2 ist schematisch eine Anordnung mit einem Färbungsbad B, wie in Figur 1 gezeigt, die zur Bestrahlung eines dreidimensionalen Kunststoffteil A-2 geeignet ist. Hier sind im Gegensatz zu der Anordnung in Figur 1 sowohl die Strahlungsquelle E als auch die Platte D beweglich gegenüber der Oberfläche des Kunststoffteil A-2 angeordnet, sodass die Strahlungsquelle E mit der Platte D in drei Dimensionen relativ zu dem Kunststoffteil A-2 bewegt werden können, um auf dem dreidimensionalen Kunststoffteil A-2 Gravierungen vornehmen zu können.

### Beispiele

**Folie 1:** Makrofol^{™} ID4-4 opak weiß, aus Polycarbonat in einer Dicke von 300 µm der Firma Covestro Deutschland AG.

**Folie 2:** Transparente Polycarbonatfolie mit IR-Absorber in einer Dicke von 100 µm wurde wie folgt hergestellt:

### Master-Batch: Compoundierung eines hoch konzentrierten IR-Masterbatches

Die Herstellung des Masterbatches für die Herstellung der Folie 2 erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
94,69 Gew.-% Polycarbonat Makrolon^{™} 3108 der Firma Covestro Deutschland AG
0,75 Gew.-% YMDS 874 IR-Absorber der Fa. Sumitomo
4,5 Gew.-% Makrolon^{™} 3108-Pulver der Firma Covestro Deutschland AG
0,006 Gew.-% (60 ppm) Flammruß 101 (Ruß der Firma Evonik-Degussa GmbH) mit
einer mittleren Teilchengröße von 95 nm

### Herstellung der Extrusionsfolie 2

Die verwendete Anlage zur Herstellung der extrudierten Folie umfasst:
einen Extruder zur Extrusion der Schicht enthaltend wenigstens ein Polycarbonat mit einer Schnecke von 60 mm Durchmesser (D) und einer Länge von 33 D. Die Schnecke weist eine Entgasungszone auf;
eine Schmelzepumpe;
einen Umlenkkopf;
eine Breitschlitzdüse mit 450 mm Breite;
einen Dreiwalzen-Glättkalander mit horizontaler Walzenanordnung, wobei die dritte Walze um +/- 45° gegenüber der Horizontalen schwenkbar ist;
eine Rollenbahn;
eine Dickenmessung;
eine Einrichtung zum beidseitigen Aufbringen von Schutzfolie;
eine Abzugseinrichtung;
eine Aufwickelstation.

Das Granulat des Master-Batchs wurde aus dem Trockner in den Fülltrichter des Extruders gefördert. Im Plastifiziersystem Zylinder/Schnecke des Extruders erfolgte das Aufschmelzen und Fördern des Materials. Von der Breitschlitz-Düse gelangte die Schmelze auf den Glättkalander. Auf dem Glättkalander (bestehend aus drei Walzen) erfolgte die endgültige Formgebung und Abkühlung der Folie. Zur Prägung der Oberflächen wurden eine strukturierte Stahl-Walze (6-er Seite) und eine strukturierte Silikon-Gummi-Walze (2-er Seite) eingesetzt. Die für die Strukturierung der Folienoberfläche verwendete Gummi-Walze ist in US-4 368 240 der Fa. Nauta Roll Corporation offenbart. Anschließend wurde die Folie durch einen Abzug transportiert und danach erfolgte die Aufwicklung der Folie.

### Lamination der Folien 1 und 2 zum Laminat A bzw A':

Die Lamination erfolgte auf einer Laminierpresse der Firma Bürckle, Modell 50/100. Die Folien 1 und 2 wurden mit folgenden Einstellungen der Presse laminiert:
Vorheizen der Presse auf 170-180 °C
Pressen für 8 Minuten bei einem Druck von 15 N/cm²
Pressen für 2 Minuten bei einem Druck von 100 N/cm²
Abkühlen der Presse auf 38 °C und öffnen der Presse.

### Zusammensetzung des Färbungsbades für Beispiel 1 und 2

69,31 Gew.-% Wasser
0,99 Gew.-% Macrolex ^{™} Blau 3R (Farbstoff, der Firma Lanxess AG Deutschland)
19,8 Gew.-% Ethylenglykolbutylether (EGBE), (Lösungsmittel, The Dow Chemical Company)
9,9 Gew.-% Teile Diethylenglykol (DEG), (Nivelliermittel, Merck KGaA)

### Zusammensetzung der Färbungslösung zur Erzeugung der Färbungsschicht

30 Gew.-% Wasser
20 Gew.-% Macrolex ^{™} Blau 3R (Farbstoff, der Firma Lanxess AG Deutschland)
50 Gew.-% Isopropanol)

### Beispiel 1 (Vergleich):

Das Laminat A wurde (transparenten Seite (Folie 2) zeigte nach oben) in das Färbungsbad (B) der oben genannten Zusammensetzung gelegt.

Zur Laserbestrahlung wurde ein NdYAG Laser der Firma Foba verwendet, Model D84 mit einer Laserleistung von ca. 7,5 Watt, einer Laserfrequenz von 8 kHz im Pulsbetrieb und einer Stromstärke von 30 A. Die Vorschubgeschwindigkeit des Lasers, Tauchtiefe und die Temperatur des Färbungsbads (B) ist in Tabelle 1 angegeben.

Das Färbungsbad mit der Folie wurde auf den Werkstückträger einer Foba D84S Laseranlage platziert. Der Fokus des Lasers (E) wurde auf die Folienoberfläche justiert. Die Angabe zur Tauchtiefe ist der Tabelle 1 zu entnehmen. Unter Tauchtiefe versteht man im Sinne dieser Erfindung die Eindringtiefe der eingesetzten Strahlung in das Färbungsbad bis zur Oberfläche des Kunststoffteils, auf das die partielle Einfärbung aufgebracht werden soll. Es wurde mit dem Laserstrahl bestrahlt.

**Tabelle 1: Bedingungen des farbigen Lasergravierens**

| Temperatur des Färbungsbad | 40 °C |
|---|---|
| Tauchtiefe | 1 mm |
| Vorschubgeschwindigkeit | 100 mm/s |

Nach der Bestrahlung mit dem Laser (E) wurde das Laminat A dem Färbungsbad entnommen und die Qualität der Lasergravur wurde visuell beurteilt. Die Gravur war nicht gleichmäßig hinsichtlich Farbintensität und Schärfe des Schriftbildes.

### Beispiel 2 (erfindungsgemäß nach dem Verfahren gem. Anspruch 1 (Laminat A) bzw. nach dem Alternativ-Verfahren (Laminat A'))

Das Laminat A (A-1) wurde (transparente Seite (Folie 2) zeigte nach oben) in das Färbungsbad (B) der oben genannten Zusammensetzung gelegt. Das Laminat A' wurde mit einer Färbungsschicht durch Drucken beschichtet.

Auf das Laminat A wurde eine Glasplatte (D) aus Silikatglas in einer Dicke von 3 mm gelegt. Durch Verwendung von Abstandshaltern wurde zwischen Laminat A und Glasplatte (D) ein Abstand von 1 mm (Tauchtiefe) eingestellt. Das Färbungsbad (B) wurde so befüllt, dass die Oberseite der Glasplatte (B) frei von Färbungsflüssigkeit bleiben konnte.

Das Laminat A' wurde in eine Halterung eingespannt.

Zur Laserbestrahlung wurde ein NdYAG Laser der Firma Foba verwendet, Model D84 mit einer Laserleistung von ca. 7,5 Watt, einer Laserfrequenz von 8 kHz für Laminat A bzw. 30 kHz für Laminat A' im Pulsbetrieb und einer Stromstärke von 30 A. Die Vorschubgeschwindigkeit des Lasers, Tauchtiefe bzw. Farbschichtdicke (b) und die Temperatur des Färbungsbads (B) sind in Tabelle 2 angegeben.

Der Fokus des Lasers (E) wurde durch die Glasplatte auf die Folienoberfläche von Laminat A' justiert. Unter Tauchtiefe bzw. Farbschichtdicke (b) versteht man im Sinne dieser Erfindung die Eindringtiefe der eingesetzten Strahlung in das Färbungsbad (B) bzw. in die Färbungsschicht b) bis zur Oberfläche des Kunststoffteils, auf das die partielle Einfärbung aufgebracht werden soll. Es wurde mit dem Laserstrahl bestrahlt.

**Tabelle 2: Bedingungen des farbigen Lasergravierens**

| | |
|---|---|
| Temperatur des Färbungsbad für Laminat A bzw. der Farbschicht für Laminat A' | 40 °C |
| Tauchtiefe bzw. Farbschichtdicke | 1 bzw. 0,3 mm definiert durch den Abstand zwischen Laminat und Glasplatte bzw. Dicke der Färbeschicht |
| Vorschubgeschwindigkeit bei Verfahren nach Anspruch 1 bzw. gem. Alternativ-Verfahren | 100 bzw. 50 mm/s |

Nach der Bestrahlung mit dem Laser wurde das Laminat A dem Färbungsbad (B) entnommen bzw. das Laminat A' wurde in einem Wasserbad mit Hilfe eines Schwamms die nicht bestrahlte Farbschicht entfernt. Anschließend wurde die Qualität der Lasergravur visuell beurteilt. Die Gravur sowohl des Laminats A als auch des Laminats A' war im Vergleich zu Beispiel 1 deutlich gleichmäßiger hinsichtlich Farbintensität und Schärfe des Schriftbildes.

## Patentansprüche

1. Verfahren zum partiellen Einfärben von Kunststoffteilen, umfassend die Schritte
i) Eintauchen eines Kunststoffteils (A) in ein Färbungsbad (B),
ii) Bestrahlung des Kunststoffteils (A) aus i) mit fokussierter nicht-ionisierender elektromagnetischer Strahlung (C),
wobei die partielle Einfärbung im Wesentlichen nur an den in Schritt ii) bestrahlten Stellen erfolgt, wobei der Wellenlängenbereich der fokussierten nicht-ionisierenden elektromagnetischen Strahlung (C) so gewählt wird, dass das Färbungsbad (B) eine Strahlungsdurchlässigkeit von ≥ 2 % bis ≤ 99%, bevorzugt von ≥ 30 % bis ≤ 95 %, besonders bevorzugt ≥ 40 % bis ≤ 93% für die gewählte Strahlung aufweist, bestimmt nach der Methode UV-VIS-NIR-MIR gemäß DIN EN ISO/IEC 17025, wobei
das Färbungsbad (B) eine Temperatur von ≤ 99°C bis ≥ -60 °C, bevorzugt von ≤ 99°C bis ≥ 0 °C, weiterhin bevorzugt von ≤ 70°C bis ≥ 10 °C, besonders bevorzugt von ≤ 50°C bis ≥ 15 °C aufweist, wobei die Temperatur des Färbungsbades (B) während der Dauer des Verfahrens bevorzugt eine konstante Temperatur aufweist, **dadurch gekennzeichnet, dass** die fokussierte nicht-ionisierende elektromagnetische Strahlung (C) vor dem Auftreffen auf das Kunststoffteil (A) durch eine Platte (D) umfassend ein oder mehrere strahlungsauskoppelnde Materialien tritt.

2. Verfahren gemäß Anspruch 1, wobei die fokussierte nicht-ionisierende elektromagnetische Strahlung (C) Laserstrahlung mit einer Wellenlänge im Bereich von ≥ 0,1 µm µm bis ≤ 1000 µm, vorzugsweise im Bereich von ≥ 1,0 µm bis ≤ 50 µm, besonders bevorzugt im Bereich von ≥ 1,0 µm bis ≤ 2,5 µm ist.

3. Verfahren gemäß Anspruch 1 oder 2, wobei der Abstand der Platte (D) zu der Oberfläche des Kunststoffteils (A) ≤ 120 mm, vorzugsweise ≥ 0,01 bis ≤ 100 mm, besonders bevorzugt ≥ 0,1 bis ≤ 20 mm und ganz besonders bevorzugt ≥ 0,1 bis ≤ 5,0 mm beträgt.

4. Verfahren gemäß Anspruch 1 bis 3, wobei das oder die Strahlungsauskoppelnde (n) Material(ien) der Platte (D) einen Scratch- Dig-Wert von ≥ 80-50 bis ≤ 10-10 , vorzugsweise von ≥ 60-40 bis ≤ 20-10, bestimmt gemäß ISO 10110-8, eine Oberflächenrauheit Rq, bestimmt gemäß ISO 10110-8, von ≥ 0,5 bis ≤ 500 nm, bevorzugt von ≥ 0,7 bis ≤ 100 nm, besonders bevorzugt von ≥ 1nm bis ≤ 10 nm und eine Strahlungsdurchlässigkeit von ≥ 50% bis ≤ 99,95%, bevorzugt von ≥ 60% bis ≤ 99,9%, besonders bevorzugt von ≥ 70% bis ≤ 99,89%, für die gewählte Strahlung aufweist, bestimmt nach der Methode UV-VIS-NIR-MIR gemäß DIN EN ISO/IEC 17025

5. Verfahren gemäß Anspruch 1 bis 4, wobei das oder die strahlungsauskoppelnden Material(ien) der Platte (D) mindestens ein oder mehrere Verbindungen aus der Gruppe Glas, strahlungsdurchlässiger Kunststoff, Mineral-Glas, synthetisches Glas, strahlungsdurchlässiger keramischer Werkstoff und/oder Mischungen aus mindestens zwei der vorstehenden Verbindungen umfasst.

6. Verfahren gemäß Anspruch 1 bis 5, wobei das Kunststoffteil (A) einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, enthält.

7. Verfahren gemäß Anspruch 1 bis 6, wobei das Kunststoffteil (A) wenigstens ein Additiv umfasst, welches im Wellenlängenbereich der eingesetzten fokussierten nicht-ionisierenden elektromagnetischen Strahlung ein Absorptionsmaximum aufweist, oder wobei das Kunststoffteil mit wenigstens einem Additiv in Form eines Beschichtungsmittels beschichtet ist, welches im Wellenlängenbereich der eingesetzten fokussierten nicht-ionisierenden elektromagnetischen Strahlung ein Absorptionsmaximum aufweist.

8. Verfahren gemäß Anspruch 7, wobei das Additiv mindestens einen oder mehrere organische und/oder anorganische IR-Absorber umfasst.

9. Verfahren gemäß Anspruch 1 bis 8, wobei das Färbungsbad (B) mindestens ein Farbmittel, vorzugsweise mindestens einen Farbstoff, oder Mischungen aus diesen umfasst.

10. Verfahren gemäß Anspruch 1 bis 9, wobei das Färbungsbad (B) mindestens einen Farbstoff der Gruppe Solvent Dyes und/oder Dispers Dyes gemäß Klassifizierung des Colour Index oder Mischungen aus diesen Farbstoffen umfasst.

11. Verfahren gemäß Anspruch 1 bis 10, wobei das Färbungsbad (B) umfasst:
a) Lösungsmittel und/oder Dispergiermittel, vorzugsweise Wasser und/oder organisches Lösungsmittel,
b) mindestens ein Farbmittel, vorzugsweise mindestens einen Farbstoff, besonders bevorzugt mindestens einen Farbstoff der Solvent Dyes und/oder Dispers Dyes gemäß Klassifizierung des Colour Index oder einer Mischung aus den vorstehend genannten.

12. Verfahren gemäß Anspruch 1 bis 11, wobei das Kunststoffteil (A) einen Schichtaufbau enthält, wobei dieser Schichtaufbau, wenigstens eine Schicht eines thermoplastischen Kunststoffs umfasst.

13. Verfahren gemäß Anspruch 12, wobei der Schichtaufbau wenigstens eine Schicht enthaltend
wenigstens einen thermoplastischen Kunststoff und
wenigstens eine weitere Schicht enthaltend wenigstens einen thermoplastischen Kunststoff und
wenigstens ein Schwarzpigment, bevorzugt Ruß.

14. Verfahren gemäß Anspruch 13, wobei vor Schritt i) und/oder nach Schritt ii) mit fokussierter nicht-ionisierender elektromagnetischer Strahlung (C) wie in Schritt ii) in Abwesenheit des Färbungsbades bestrahlt wird.

15. Sicherheitsdokument umfassend ein nach dem Verfahren gemäß Anspruch 1 bis 14 partiell eingefärbtes Kunststoffteil.

16. Vorrichtung zur Durchführung des Verfahrens nach einem der Ansprüche 1 bis 14 umfassend ein Färbungsbad (B), eine Platte (D) umfassend ein oder mehrere strahlungsauskoppelnde Materialien und eine Strahlungsquelle (E) zur Erzeugung einer fokussierten nicht-ionisierenden elektromagnetischen Strahlung (C), wobei das Färbungsbad (B) bevorzugt eine Temperatur von ≤ 99°C bis ≥ -60,0 °C, weiterhin bevorzugt ≤ 99°C bis ≥ 0,0 °C, bevorzugt von ≤ 70°C bis ≥ 10 °C, besonders bevorzugt von ≤ 50°C bis ≥ 15 °C, aufweist, wobei die Temperatur bei Inbetriebnahme der Vorrichtung in einem Tempertaturbereich von 100 °C variieren kann oder konstant bleibt, **dadurch gekennzeichnet, dass** die fokussierte nicht-ionisierende elektromagnetische Strahlung (C) vor dem Auftreffen auf das Kunststoffteil (A) durch die Platte (D) umfassend ein oder mehrere strahlungsauskoppelnde Materialien tritt.

17. Die Vorrichtung nach Anspruch 16, wobei das Färbungsbad (B) eine Temperatur von ≤ 99°C bis ≥ -60 °C, bevorzugt von ≤ 99°C bis ≥ 0 °C, weiter bevorzugt von ≤ 70°C bis ≥ 10 °C, besonders bevorzugt von ≤ 50°C bis ≥ 15 °C aufweist, wobei die Temperatur bei Inbetriebnahme der Vorrichtung bevorzugt konstant bleibt.

## Claims

1. Process for partial colouring of plastic parts, comprising the steps of
i) immersing a plastic part (A) in a colouring bath (B),
ii) irradiating the plastic part (A) from i) with focused nonionizing electromagnetic radiation (C),
wherein the partial colouring is effected substantially only at the sites irradiated in step ii),
wherein the wavelength range of the focused nonionizing electromagnetic radiation (C) is chosen such that the colouring bath (B) has a radiation permeability of ≥ 2% to ≤ 99%, preferably of ≥ 30% to ≤ 95%, particularly preferably of ≥ 40% to ≤ 93%, for the chosen radiation determined by the UV-VIS-NIR-MIR method according to DIN EN ISO/IEC 17025, wherein the colouring bath (B) has a temperature of ≤ 99°C to ≥ -60°C, preferably of ≤ 99°C to ≥ 0°C, more preferably of ≤ 70°C to ≥ 10°C, particularly preferably of ≤ 50°C to ≥ 15°C, wherein the temperature of the colouring bath (B) preferably has a constant temperature over the duration of the process, **characterized in that** the focused nonionizing electromagnetic radiation (C) passes through a sheet (D) comprising one or more radiation-decoupling materials before impacting the plastic part (A).

2. Process according to Claim 1, wherein the focused nonionizing electromagnetic radiation (C) is laser radiation having a wavelength in the range from ≥ 0.1 µm to ≤ 1000 µm, preferably in the range from ≥ 1.0 µm to ≤ 50 µm, particularly preferably in the range from ≥ 1.0 µm to ≤ 2.5 µm.

3. Process according to Claim 1 or 2, wherein the distance of the sheet (D) from the surface of the plastic part (A) is ≤ 120 mm, preferably ≥ 0.01 to ≤ 100 mm, particularly preferably ≥ 0.1 to ≤ 20 mm and very particularly preferably ≥ 0.1 to ≤ 5.0 mm.

4. Process according to any of Claims 1 to 3, wherein the radiation-decoupling material(s) of the sheet (D) exhibit(s) a scratch-dig value of ≥ 80-50 to ≤ 10-10, preferably of ≥ 60-40 to ≤ 20-10, determined according to ISO10110-8, a surface roughness Rq determined according to ISO 10110-8 of ≥ 0.5 to ≤ 500 nm, preferably of ≥ 0.7 to ≤ 100 nm, particularly preferably of ≥ 1nm to ≤ 10 nm, and a radiation permeability of ≥ 50% to ≤ 99.95%, preferably of ≥ 60% to ≤ 99.9%, particularly preferably of ≥ 70% to ≤ 99.89%, for the chosen radiation determined according to the UV-VIS-NIR-MIR method according to DIN EN ISO/IEC 17025.

5. Process according to any of Claims 1 to 4, wherein the radiation-decoupling material(s) of the sheet (D) comprise(s) at least one or more compounds from the group of glass, radiation-permeable plastic, mineral glass, synthetic glass, radiation-permeable ceramic material and/or mixtures of at least two of the abovementioned compounds.

6. Process according to any of Claims 1 to 5, wherein the plastic part (A) contains a thermoplastic plastic selected from polymers of ethylenically unsaturated monomers and/or polycondensates of bifunctional reactive compounds and/or polyaddition products of bifunctional reactive compounds.

7. Process according to any of Claims 1 to 6, wherein the plastic part (A) comprises at least one additive which has an absorption maximum in the wavelength range of the employed focused nonionizing electromagnetic radiation or wherein the plastic part is coated with at least one additive in the form of a coating composition which has an absorption maximum in the wavelength range of the employed focused nonionizing electromagnetic radiation.

8. Process according to Claim 7, wherein the additive comprises at least one or more organic and/or inorganic IR absorbers.

9. Process according to any of Claims 1 to 8, wherein the colouring bath (B) comprises at least one colorant, preferably at least one dye, or mixtures thereof.

10. Process according to any of Claims 1 to 9, wherein the colouring bath (B) comprises at least one dye from the group of solvent dyes and/or disperse dyes according to the Colour Index classification or mixtures of these dyes.

11. Process according to any of Claims 1 to 10, wherein the colouring bath (B) comprises:
a) solvent and/or dispersant, preferably water and/or organic solvent,
b) at least one colorant, preferably at least one dye, particularly preferably at least one dye from the solvent dyes and/or disperse dyes according to the Colour Index classification or a mixture of the abovementioned dyes.

12. Process according to any of Claims 1 to 11, wherein the plastic part (A) contains a layer construction, wherein this layer construction comprises at least one layer of a thermoplastic plastic.

13. Process according to Claim 12, wherein the layer construction comprises at least one layer containing at least one thermoplastic plastic and
at least one further layer containing at least one thermoplastic plastic and
at least one black pigment, preferably carbon black.

14. Process according to Claim 13, wherein said process comprises irradiating with focused nonionizing electromagnetic radiation (C) as in step ii) in the absence of the colouring bath before step i) and/or after step ii).

15. Security document comprising a plastic part partially coloured by the process according to any of Claims 1 to 14.

16. Apparatus for performing the process according to any of Claims 1 to 14 comprising a colouring bath (B), a sheet (D) comprising one or more radiation-decoupling materials and a radiation source (E) for producing a focused nonionizing electromagnetic radiation (C), wherein the colouring bath (B) preferably has a temperature of ≤ 99°C to ≥ -60.0°C, more preferably of ≤ 99°C to ≥ 0.0°C, preferably of ≤ 70°C to ≥ 10°C, particularly preferably of ≤ 50°C to ≥ 15°C, wherein the temperature may vary in a temperature range of 100°C or remains constant upon startup of the apparatus, **characterized in that** the focused nonionizing electromagnetic radiation (C) passes through the sheet (D) comprising one or more radiation-decoupling materials before impacting the plastic part (A).

17. Apparatus according to Claim 16, wherein the colouring bath (B) has a temperature of ≤ 99°C to ≥ - 60°C, preferably of ≤ 99°C to ≥ 0°C, more preferably of ≤ 70°C to ≥ 10°C, particularly preferably of ≤ 50°C to ≥ 15°C, wherein the temperature preferably remains constant upon startup of the apparatus.

## Revendications

1. Procédé de coloration partielle de pièces en matériau synthétique, comprenant les étapes
i) immersion d'une pièce en matériau synthétique (A) dans un bain de coloration (B),
ii) exposition de la pièce en matériau synthétique (A) de i) à un rayonnement électromagnétique focalisé non ionisant (C),
la coloration partielle n'ayant lieu sensiblement qu'aux endroits exposés à un rayonnement dans l'étape ii), la plage de longueurs d'onde du rayonnement électromagnétique focalisé non ionisant (C) étant choisie de telle sorte que le bain de coloration (B) présente une transparence au rayonnement de ≥ 2% à ≤ 99%, de préférence de ≥ 30% à ≤ 95%, de manière particulièrement préférée de ≥ 40% à ≤ 93% pour le rayonnement choisi, déterminée par la méthode UV-VIS-NIR-MIR selon la norme DIN EN ISO/IEC 17025, le bain de coloration (B) présentant une température de ≤ 99°C à ≥ -60°C, de préférence de ≤ 99°C à ≥ 0°C, plus préférablement de ≤ 70°C à ≥ 10°C, de manière particulièrement préférée de ≤ 50°C à ≥ 15°C, la température du bain de coloration (B) présentant de préférence une température constante pendant la durée du procédé, **caractérisé en ce que** le rayonnement électromagnétique focalisé non ionisant (C) passe, avant de rencontrer la pièce en matériau synthétique (A), à travers une plaque (D) comprenant un ou plusieurs matériaux de découplage du rayonnement.

2. Procédé selon la revendication 1, le rayonnement électromagnétique focalisé non ionisant (C) étant un rayonnement laser présentant une longueur d'onde dans la plage de ≥ 0,1 µm à ≤ 1000 µm, de préférence dans la plage de ≥ 1,0 µm à ≤ 50 µm, de manière particulièrement préférée dans la plage de ≥ 1,0 µm à ≤ 2,5 µm.

3. Procédé selon la revendication 1 ou 2, la distance entre la plaque (D) et la surface de la pièce en matériau synthétique (A) étant ≤ 120 mm, de préférence de ≥ 0,01 à ≤ 100 mm, de manière particulièrement préférée de ≥ 0,1 à ≤ 20 mm et de manière tout particulièrement préférée de ≥ 0,1 à ≤ 5,0 mm.

4. Procédé selon la revendication 1 à 3, le(s) matériau(x) de découplage du rayonnement de la plaque (D) présentant une valeur rayure-creux de ≥ 80-50 à ≤ 10-10, de préférence de ≥ 60-40 à ≤ 20-10, déterminée selon la norme ISO10110-8, une rugosité de surface Rq, déterminée selon la norme ISO 10110-8, de ≥ 0,5 à ≤ 500 nm, de préférence de ≥ 0,7 à ≤ 100 nm, de manière particulièrement préférée de ≥ 1 nm à ≤ 10 nm et une transparence au rayonnement de ≥ 50% à ≤ 99,95%, de préférence de ≥ 60% à ≤ 99,9%, de manière particulièrement préférée de ≥ 70% à ≤ 99,89%, pour le rayonnement choisi, déterminée par la méthode UV-VIS-NIR-MIR selon la norme DIN EN ISO/IEC 17025.

5. Procédé selon la revendication 1 à 4, le(s) matériau(x) de découplage du rayonnement de la plaque (D) comprenant au moins un ou plusieurs composés du groupe verre, matériau synthétique transparent au rayonnement, verre minéral, verre synthétique, matériau céramique transparent au rayonnement et/ou mélanges d'au moins deux des composés ci-dessus.

6. Procédé selon la revendication 1 à 5, la pièce en matériau synthétique (A) contenant un matériau synthétique thermoplastique choisi parmi les polymères de monomères éthyléniquement insaturés et/ou les produits de polycondensation de composés réactifs bifonctionnels et/ou les produits de polyaddition de composés réactifs bifonctionnels.

7. Procédé selon la revendication 1 à 6, la pièce en matériau synthétique (A) comprenant au moins un additif qui présente un maximum d'absorption dans la plage de longueurs d'onde du rayonnement électromagnétique focalisé non ionisant utilisé ou la pièce en matériau synthétique étant revêtue par au moins un additif sous forme d'un agent de revêtement qui présente un maximum d'absorption dans la plage de longueurs d'onde du rayonnement électromagnétique focalisé non ionisant utilisé.

8. Procédé selon la revendication 7, l'additif comprenant au moins un ou plusieurs absorbants organiques et/ou inorganiques des IR.

9. Procédé selon la revendication 1 à 8, le bain de coloration (B) comprenant au moins une matière colorante, de préférence au moins un colorant, ou des mélanges correspondants.

10. Procédé selon la revendication 1 à 9, le bain de coloration (B) comprenant au moins un colorant du groupe Solvent Dyes et/ou Dispers Dyes selon la classification du Colour Index ou des mélanges de ces colorants.

11. Procédé selon la revendication 1 à 10, le bain de coloration (B) comprenant :
a) un solvant et/ou un dispersant, de préférence de l'eau et/ou un solvant organique,
b) au moins une matière colorante, de préférence au moins un colorant, de manière particulièrement préférée au moins un colorant parmi les Solvent Dyes et/ou les Dispers Dyes selon la classification du Colour Index ou un mélange des matières colorantes mentionnées.

12. Procédé selon la revendication 1 à 11, la pièce en matériau synthétique (A) contenant une structure stratifiée, cette structure stratifiée comprenant au moins une couche d'un matériau synthétique thermoplastique.

13. Procédé selon la revendication 12, la structure stratifiée comprenant au moins une couche contenant au moins un matériau synthétique thermoplastique et
au moins une autre couche contenant au moins un matériau synthétique thermoplastique et
au moins un pigment noir, de préférence de la suie.

14. Procédé selon la revendication 13, une exposition au rayonnement électromagnétique focalisé non ionisant (C) comme dans l'étape ii) ayant lieu avant l'étape i) et/ou après l'étape ii) en l'absence du bain de coloration.

15. Document de sécurité comprenant une pièce en matériau synthétique partiellement colorée par le procédé selon la revendication 1 à 14.

16. Dispositif pour la mise en œuvre du procédé selon l'une des revendications 1 à 14 comprenant un bain de coloration (B), une plaque (D) comprenant un ou plusieurs matériaux de découplage du rayonnement et une source de rayonnement (E) pour la génération d'un rayonnement électromagnétique focalisé non ionisant (C), le bain de coloration (B) présentant de préférence une température de ≤ 99°C à ≥ -60,0°C, plus préférablement de ≤ 99°C à ≥ 0,0°C, de préférence de ≤ 70°C à ≥ 10°C, de manière particulièrement préférée de ≤ 50°C à ≥ 15°C, la température pouvant varier dans une plage de température de 100°C ou restant constante lors de la mise en service du dispositif, **caractérisé en ce que** le rayonnement électromagnétique focalisé non ionisant (C) passe, avant de rencontrer la pièce en matériau synthétique (A), à travers la plaque (D) comprenant un ou plusieurs matériaux de découplage du rayonnement.

17. Dispositif selon la revendication 16, le bain de coloration (B) présentant une température de ≤ 99°C à ≥ -60°C, de préférence de ≤ 99°C à ≥ 0°C, plus préférablement de ≤ 70°C à ≥ 10°C, de manière particulièrement préférée de ≤ 50°C à ≥ 15°C, la température restant de préférence constante lors de la mise en service du dispositif.
